Europäisches Patentamt

European Patent Office

Office européen des brevets

(19)

(11) Veröffentlichungsnummer: **0 209 743**

**A2**

(12) # EUROPÄISCHE PATENTANMELDUNG

(21) Anmeldenummer: **86108566.0**

(22) Anmeldetag: **24.06.86**

(51) Int. Cl.⁴ **A01D 69/06**

(30) Priorität: **22.07.85 US 757239**

(43) Veröffentlichungstag der Anmeldung:
**28.01.87 Patentblatt 87/05**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Cheatum, Leo George**
**116 Deppe Lane**
**Ottumwa Iowa 52501(US)**

(74) Vertreter: **Feldmann, Bernhard**
**DEERE & COMPANY European Office, Patent**
**Department Steubenstrasse 36-42 Postfach**
**503**
**D-6800 Mannheim 1(DE)**

(54) **Getriebe.**

(57) Ein Getriebe (30), insbesondere für eine Ballenpresse (10), enthält ein Planetengetriebe (56), das in der Kraftflußrichtung hinter einem einfach ausgebildeten Winkelgetriebe (42) und einem schnelldrehenden Schwungrad (52) gelegen ist und eine hohe Eingangsdrehzahl auf eine gewollte Betriebsdrehzahl reduziert.

*Fig. 2*

EP 0 209 743 A2

## Getriebe

Die Erfindung bezieht sich auf ein Getriebe, insbesondere für eine Erntebergungsmaschine, mit einer Drehzahluntersetzung.

Ein derartiges von einer Ballenpresse bekanntes Getriebe (Rectangular Balers, Avco -New Idea, Form No. 8230-12) enthält eine Eingangswelle, auf der ein Schwungrad angeordnet ist und die zu einem ersten antriebsseitigen Winkelgetriebe führt. Das Winkelgetriebe enthält ein eingangsseitiges und ein demgegenüber im Durchmesser wesentlich größeres ausgangsseitiges Kegelrad. Auf diese Weise ergibt sich eine Drehzahlreduktion der Eingangswellendrehzahl auf eine Betriebsdrehzahl, die geeignet ist, verschiedene Untergetriebe, z. B. für einen Kurbelarm eines Preßkolbens, einen Nadelantrieb, einen Pick-up-Antrieb oder einen Knüpferantrieb, zu betreiben.

Diesem bekannten Getriebe haftet der Nachteil an, daß der Winkeltrieb zu raumaufwendig ist, daß er keine Möglichkeit einer Drehzahländerung außer der Drezahlreduktion bietet und daß seine Herstellung und Wartung zu kosten-und zeitaufwendig ist.

Die der Erfindung zugrunde liegende Aufgabe wird darin gesehen, ein Getriebe für eine Erntebergungsmaschine wie eine Ballenpresse, einen Häcksler oder dergleichen zu schaffen, das zumindest einfacher und kostengünstiger herzustellen ist.

Diese Aufgabe ist erfindungsgemäß dadurch gelöst worden, daß die Drehzahluntersetzung durch ein Planetengetriebe erreicht wird.

Hierdurch wird auf platzsparende Weise eine Drehzahluntersetzung erreicht, mit der eine Kostenreduzierung einher geht, weil die Einzelteile eines Planetengetriebes mit größeren Toleranzen und geringeren Festigkeitsanforderungen gefertigt werden können als die eines Winkelgetriebes. Ferner entfallen bei einem Planetengetriebe die für ein Winkelgetriebe bekannten zeitraubenden Einstellungsarbeiten.

Die Anordnung des ersten Winkelgetriebes eingangsseitig des die Drehzahluntersetzung hervorrufenden Planetengetriebes führt auch zu einer Kostenreduktion bei dem Winkelgetriebe, da dieses bei Übertragung eines gleich hohen Drehmoments aufgrund der höheren Eingangsdrehzahl schwächer ausgebildet sein kann.

Die vorteilhafte Verbindung des Planetengetriebes mit anzutreibenden Untergetrieben der Erntebergungsmaschine bzw. mit einem dieser zugeordneten Schwungrad ist Gegenstand der Unteransprüche. Dabei kann insbesondere das Schwungrad in seinem Außendurchmesser relativ gering gehalten werden, weil es ebenfalls mit der hohen Eingangsdrehzahl umläuft und somit entsprechend viel Schwungenergie speichert. Das Schwungrad ist über eine Abscherschraube mit einer zu dem Sonnenrad führenden Welle verbunden, so daß der Antrieb zu dem Planetengetriebe unterbrochen wird, wenn die Abscherschraube abschert.

Die zur Fahrtrichtung der Erntebergungsmaschine geneigt, jedoch in Richtung einer Deichsel verlaufende Rotationsachse des eingangsseitigen Kegelrades des antriebsseitigen ersten Winkelgetriebes führt dazu, daß keine Unterschiede in der Winkelgeschwindigkeit des Getriebes auftreten, die eine Materialermüdung hervorrufen können.

Das Planetengetriebe eröffnet zudem die Möglichkeit, das Ringrad mit einer bestimmten Drehzahl anzutreiben, so daß dann, wenn das Getriebe von einem Ackerschlepper aus angetrieben wird, der 540 und 1 000 Umdrehungen pro Minute oder nur eine der beiden Umdrehungszahlen pro Minute an der Zapfwelle abgeben kann, eine Drehzahlanpassung auf die Drehzahl möglich ist, mit der die Erntebergungsmaschine optimal betrieben wird.

In der Zeichnung ist ein nachfolgend näher beschriebenes Ausführungsbeispiel der Erfindung dargestellt. Es zeigt:

Figur 1 eine Ballenpresse mit einem erfindungsgemäßen Getriebe in perspektivischer Ansicht und

Figur 2 das Getriebe aus Figur 1 im Horizontalschnitt.

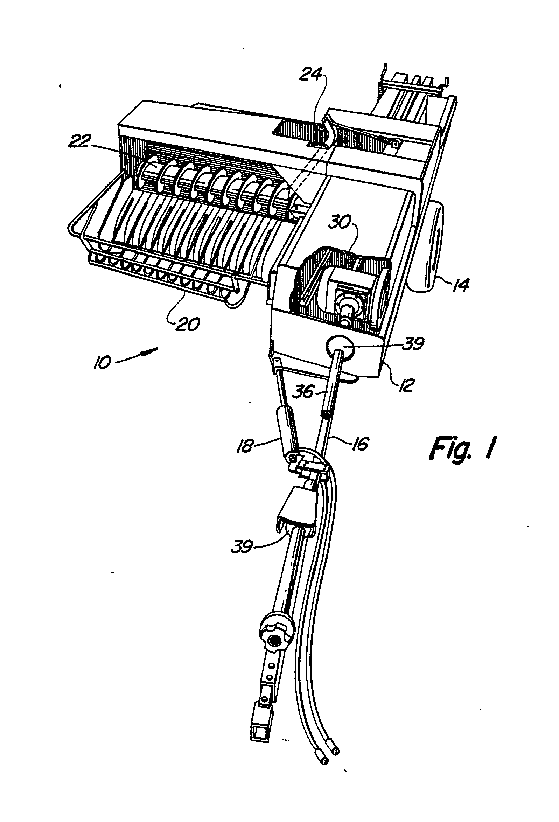

Eine in Figur 1 dargestellte Ballenpresse 10 zum Herstellen von rechteckförmigen Ballen aus Stroh oder Heu enthält ein Fahrgestell 12, das von Rädern 14 getragen wird, wobei nur das linke Rad 14 zu erkennen ist. An der vorderen Endbereich des Fahrgestells 12 ist eine Deichsel 16 angelenkt, deren rückwärtiges Ende mittels eines nicht dargestellen Bolzens an dem Fahrgestell 12 schwenkbar angreift, so daß die Deichsel 16 horizontal geschwenkt werden kann, um entweder eine Transportstellung, in der die Ballenpresse 10 direkt hinter einem sie ziehenden nicht gezeigten Fahrzeug läuft, oder eine Betriebsstellung einzunehmen, in der sie seitlich zu dem Fahrzeug versetzt gezogen wird. Eine hydraulische Betätigungseinrichtung 18 ist sowohl mit der Deichsel 16 wie auch mit dem Fahrgestell 12 verbunden, um so die Deichsel 16 verschwenken zu können. An dem Fahrgestell 12 ist außerdem eine Aufnahmevorrichtung 20 von herkömmlicher Bauweise aufgehängt, die, ohne dies im einzelnen zu zeigen oder zu beziffern, eine Vielzahl von in Reihen angeordneten und auf einer Welle befestigten Zähnen enthält und dazu dient, auf den Boden abgelegtes Erntegut einer Querförderschnecke 22 aufzugeben, die es einer Ballenpreßkammer zuführt. Nahe eines der Enden der Querförder schnecke 22 ist ein Gabelzuführmechanismus 24 vorgesehen, der das Erntegut gleichmäßig in der Ballenpreßkammer verteilt.

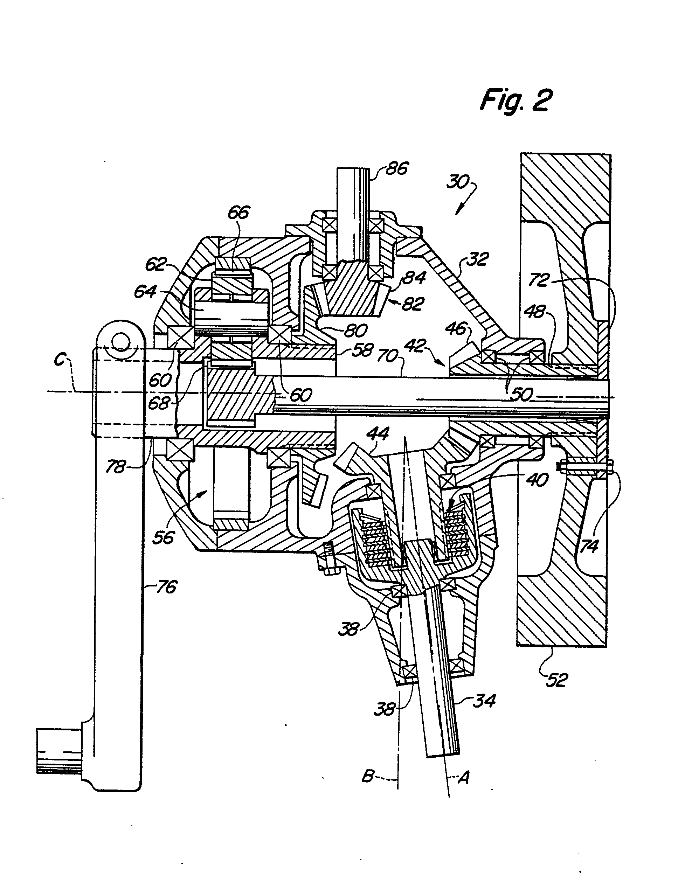

Vor der Ballenpreßkammer stützt sich auf dem Fahrgestell 12 ein Getriebe 30 für einen Hauptantrieb ab, das im Detail aus Figur 2 hervorgeht. Daraus ist zu ersehen, daß das Getriebe 30 ein Gehäuse 32 mit einer Eingangswelle 34 enthält, die sich durch den vorderen Abschnitt des Gehäuses 32 erstreckt und mit dem rückwärtigen Ende einer Gelenkwelle 36 verbunden ist, deren vorderes Ende an einer Zapfwelle des Fahrzeuges, in der Regel an der eines Ackerschleppers, angreift. Die Eingangswelle 34 ist in dem Gehäuse 32 mittels zweier Lager 38 um eine Achse -A-drehbar gelagert, die sich in Fahrtrichtung gesehen nach links von einer Linie -B-wegbewegt, die sich in der Fahrtrichtung der Ballenpresse 10, also parallel zu deren Fahrspur, erstreckt, so daß die Gelenkwelle 36 zu der Eingangswelle 34 ausgerichtet ist. Das Ergebnis daraus ist, daß im Betrieb der Ballenpresse 10 die Kraft auf die Eingangswelle 34 über Universalgelenke 39 mit im wesentlichen konstanter Winkelgeschwindigkeit übertragen werden kann. Die Eingangswelle 34 ist über eine Rutschkupplung 40 in nasser Bauart mit einem ersten oder antriebsseitigen Winkelgetriebe 42 verbunden, das ein eingangsseitiges und ein ausgangsseitiges Kegelrad 44 und 46 enthält. Das ausgangsseitige oder getriebene Kegelrad 46 ist als Hohlrad mit einer sich längs erstreckenden Hülse 48 ausgebildet, die über Lager 50 um eine Achse -C-in dem Gehäuse 32 drehbar gelagert ist, wobei sich die Achse -C-senkrecht zu der Linie -B-erstreckt. Der linke äußere Endbereich der Hülse 48 weist eine Verzahnung auf, die in Eingriff mit einem Schwungrad 52 steht, so daß die das Schwungrad 52 treibende Kraft zunächst über die Rutschkupplung 40 verläuft. In einem rechten Endbereich des Gehäuses 32 ist ein Planetengetriebe 56 untergebracht, das einen Planetenradträger 58 enthält. Der Planetenradträger 58 ist ebenfalls um die Achse -C-drehbar und wird in dem Gehäuse 32 mittels Lagern 60 getragen. Zur Aufnahme der Lager 60 ist der Planetenradträger 58 in seinem Mittenbereich, also konzentrisch zu seiner Rotationsachse, rohrförmig ausgebildet. In einem Bereich zwischen den Aufnahmestellen für die Lager 60 ist ein Satz von drei gleichwinklig in einer Ebene quer zu der Achse -C-angeordneten Planetenrädern 62, von denen nur eins gezeigt ist, auf Bolzen 64 in dem Planetenradträger 58 drehbar gehalten. Die Planetenräder 62 stehen sowohl in Eingriff mit einem Ringrad 66 wie mit einem Sonnenrad 68, wobei das Ringrad 66 fest an dem Gehäuse 32 angebracht ist, um so ein Reaktionsglied für das Planetengetriebe 56 zu bilden. Das Sonnenrad 68 ist in einem Teil mit einem rechtsseitigen Endbereich einer Welle 70 ausgebildet, die sich konzentrisch zu der Achse -C-erstreckt und deren linksseitiges Ende drehbar in der Hülse 48 des ausgangsseitigen Kegelrades 46 aufgenommen ist. An dem linken Ende der Welle 70 ist eine runde Platte oder Scheibe 72 befestigt, die zudem über eine Überlastsicherung 74 in der Art einer Abscherschraube an dem Schwungrad 52 zur gemeinsamen Rotation mit diesem angreift. Daraus folgt, daß bei einem Ansprechen der Überlastsicherung 74, wenn also die Abscherschraube abschert, der Kraftfluß zu dem Planetengetriebe 56 unterbrochen wird. Der Planetenradträger 58 dient als Ausgangsglied des Planetengetriebes 56 und ist an seinem rechten Endbereich 78, der sich aus dem Gehäuse 32 rechts heraus erstreckt, mit einem Kurbeltrieb 76 für einen Preßkolben verbunden. Auf dem linken Endbereich des Planetenradträgers 58 ist über eine Verzahnung ein antriebsseitiges Kegelrad 80 eines einfachen zweiten Winkelgetriebes 82 mit einem abtriebsseitigen Kegelrad 84 aufgesetzt, wobei das abtriebsseitige Kegelrad 84 zusammen mit einem vorderen Endbereich einer sich von vorne nach hinten erstreckenden Antriebswelle 86 für einen Knüpferantrieb und ein Zuführsystem ausgebildet ist. Die Antriebswelle 86 ist, wie man sich vorstellen kann, wiederum mit weiteren Wellen oder Untergetrieben antriebsmäßig verbunden, die etwa mit dem Gabelzuführmechanismus 24 oder mit dem nicht dargestellten Knüpferantrieb zum Verknoten zweier Enden eines Garnes oder eines Drahtes in Verbindung stehen.

Anstelle des fest in dem Gehäuse 32 angeordneten Ringrades 66 kann auch ein Ringrad 66 vorgesehen sein, das gegenüber dem Gehäuse 32 drehbar ist, und zwar entweder über einen Motor oder von der Eingangswelle 34 aus, so daß daraus eine Drehzahl des Planetenradträgers 58 resultiert, die für den Antrieb der Ballenpresse 10 geeignet ist und eine entsprechende Reduktion der Drehzahl der Eingangswelle 34 darstellt. .

Die Funktion des Getriebes 30 geht aus dem Vorbeschriebenen wie auch aus der Zeichnung klar hervor, so daß deren separate Beschreibung unterlassen werden kann. Die Ausbildung des Getriebes 30 mit der durch das Planetengetriebe 56 erreichten Drehzahlreduktion erlaubt die Benutzung eines Schwungrades 52 mit einer geringen Schwungmasse, d. h. mit geringen Außenabmessungen, das bei einer hohen Drehzahl dennoch ein ausreichend hohes Schwungmoment erbringt. Das zum Antrieb des Schwungrades 52 erforderliche erste Winkelgetriebe 42 kann aufgrund des geringen Eingangsdrehmoments ebenfalls relativ einfach und schwach ausgebildet werden, und zwar auch dann, wenn der Antrieb der Ballenpresse 10 von einer Zapfwelle mit 540 Umdrehungen pro Minute ausgeht. Das Planetengetriebe 56 kommt zudem mit einem kleinvolumigen Gehäuse 32 aus.

## Ansprüche

1. Getriebe (30), insbesondere für eine Erntebergungsmaschine, mit einer Drehzahluntersetzung, dadurch gekennzeichnet, daß die Drehzahluntersetzung durch ein Planetengetriebe (56) erreicht wird. .

2. Getriebe nach Anspruch 1 mit einem ersten Winkelgetriebe (42), dadurch gekennzeichnet, daß das erste Winkelgetriebe (42) eingangsseitig des Planetengetriebes (56) angeordnet ist.

3. Getriebe nach Anspruch 1 oder 2 für eine Ballenpresse (10), dadurch gekennzeichnet, daß ein Planetenradträger (58) den abtriebsseitigen und ein Sonnenrad (68) den antriebsseitigen Teil des Planetengetriebes (56) bildet.

4. Getriebe nach Anspruch 3, wobei die Ballenpresse (10) mehrere dem Getriebe (30) nachgeordnete Untergetriebe enthält, dadurch gekennzeichnet, daß alle Untergetriebe von dem Planetenradträger (58) aus angetrieben werden.

5. Getriebe nach Anspruch 4, dadurch gekennzeichnet, daß der Planetenradträger (58) fest mit einem Kegelrad (80) eines zweiten abtriebsseitigen Winkelgetriebes (82) verbunden ist.

6. Getriebe nach Anspruch 3, wobei die Ballenpresse (10) zusätzlich ein Schwungrad (52) enthält, dadurch gekennzeichnet, daß das Sonnenrad (68) mit dem Schwungrad (52) verbunden bzw. über eine Überlastsicherung (74) verbindbar ist.

7. Getriebe nach einem oder mehreren der vorherigen Ansprüche, dadurch gekennzeichnet, daß ein eingangssei tiges Kegelrad (44) des ersten Winkelgetriebes (42) über eine Rutschkupplung - (40) antreibbar und ein ausgangsseitiges Kegelrad (46) des ersten Winkelgetriebes (42) mit dem Schwungrad (52) verbunden ist.

8. Getriebe nach einem oder mehreren der vorherigen Ansprüche für eine Ballenpresse (10) mit einer in eine Betriebsstellung bringbaren Deichsel (16), dadurch gekennzeichnet, daß die Rotationsachse (Achse -A-) des eingangsseitigen Kegelrades (44) des ersten Winkelgetriebes (42) in der Richtung der Deichsel (16) verläuft, nachdem diese in ihre Betriebsstellung gebracht worden ist.

9. Getriebe nach einem oder mehreren der vorherigen Ansprüche, dadurch gekennzeichnet, daß das ausgangsseitige Kegelrad (46) des ersten Winkelgetriebes (42) eine Hülse (48) aufweist, auf deren Außenseite das Schwungrad (52) starr befestigt ist und in der sich eine das Sonnenrad (68) mit dem Schwungrad (52) verbindende Welle (70) erstreckt.

10. Getriebe nach Anspruch 1, das in einem Gehäuse (32) angeordnet ist, dadurch gekennzeichnet, daß ein Ringrad (66) des Planetengetriebes (56) drehfest in dem Gehäuse (32) gehalten ist, wenn der Antrieb zu dem Getriebe (30) in einer einzigen Betriebsdrehzahl erfolgt, und mit einer oder mehreren Drehzahlen drehbar ist, wenn der Antrieb in mehreren Betriebsdrehzahlen erfolgen kann.

Fig. 1

Fig. 2